# EUROPEAN PATENT APPLICATION

(11) **EP 4 068 117 A1**
(43) Date of publication of application: **05.10.2022**
(21) Application number: 21194230.5
(22) Date of filing: 01.09.2021
(51) Int. Cl.: G06F 16/93, G06F 16/955

(54) **INFORMATION PROCESSING SYSTEM, PROGRAM, AND INFORMATION PROCESSING METHOD**

(30) Priority: 29.03.2021 JP 2021055539
(71) Applicant: FUJIFILM Business Innovation Corp., Minato-ku Tokyo (JP)
(72) Inventor: HIRATA, Motoharu, Yokohama-shi (JP)
(74) Representative: Becker, Eberhard

(57) **Abstract**

An information processing system includes a processor configured to manage a second document in which information for specifying a location at which a first document managed by the information processing system or another system exists is associated with a page in an arrangement order, and when the second document is browsed, in a case where the first document associated with the page to be browsed is read and provided to a viewer, display an operator requesting a person in charge to resolve an event that the first document is not read on a screen used for browsing when the event is detected.

## Description

### BACKGROUND OF THE INVENTION

### (i) Field of the Invention

The present invention relates to an information processing system, a program, and an information processing method.

### (ii) Description of Related Art

There is a service that allows, by defining a data structure in which links to independently existing documents are arranged in an order of appearance, a browsing user to observe the documents as if the documents are a single document. Hereinafter, the document having this kind of structure is referred to as a "bundle document". In a case where the user browses the bundle document, the target document is downloaded from a link destination corresponding to each page and displayed on a display of the user.

Examples of the related art include JP2006-268314A.

### SUMMARY OF THE INVENTION

Meanwhile, in a case where a storage location of the target document is changed or the target document is deleted from the storage location after registering the link to the bundle document, an error will occur due to the target document not being found. In addition, even in a case where the target document exists in the registered storage location, the target document cannot be downloaded in a case where an access right of the browsing user is expired, in a case where authentication to a system in which the document is stored at first fails, or the like. In this case as well, a browsing error occurs as a result.

There are other causes for the error to occur, and in order to resolve the error, it is necessary to contact an owner or an administrator of the document, which imposes a heavy workload on the viewer.

An object of the present invention is to improve, as compared with a case where an error associated with browsing a bundle document is resolved by an individual inquiry by an individual viewer, efficiency of a work required for resolving the error.

According to a first aspect of the present disclosure, there is provided an information processing system including a processor configured to manage a second document in which information for specifying a location at which a first document managed by the information processing system or another system exists is associated with a page in an arrangement order, and when the second document is browsed, in a case where the first document associated with the page to be browsed is read and provided to a viewer, display an operator requesting a person in charge to resolve an event that the first document is not read on a screen used for browsing when the event is detected.

According to a second aspect of the present disclosure, in the information processing system according to the first aspect, the event that the first document is not read may be a case where the first document to be read does not exist at the location registered for the second document.

According to a third aspect of the present disclosure, in the information processing system according to the second aspect, the processor may be configured to in a case where the first document does not exist at the location, request the person in charge to designate a document to be displayed as a substitute.

According to a fourth aspect of the present disclosure, in the information processing system according to the second aspect, the processor may be configured to in a case where the first document does not exist at the location, request the person in charge for a new location at which the first document exists.

According to a fifth aspect of the present disclosure, in the information processing system according to the first aspect, the event that the first document is not read may be a case where the viewer does not have an access right to the system that manages the first document.

According to a sixth aspect of the present disclosure, in the information processing system according to the fifth aspect, the processor may be configured to request the person in charge to grant the access right to the system that manages the first document to be read.

According to a seventh aspect of the present disclosure, in the information processing system according to the fifth aspect, the processor may be configured to present a screen for inputting information for logging in to the system that manages the first document to be read, to the viewer.

According to an eighth aspect of the present disclosure, in the information processing system according to the first aspect, the event that the first document is not read may be a case where the viewer does not have an access right to the first document.

According to a ninth aspect of the present disclosure, in the information processing system according to the eighth aspect, the processor may be configured to request the person in charge to grant the access right to the first document to be read.

According to a tenth aspect of the present disclosure, in the information processing system according to the eighth aspect, the processor may be configured to present a screen for inputting information for accessing the first document to be read, to the viewer.

According to an eleventh aspect of the present disclosure, in the information processing system according to any one of the first to tenth aspects, the processor may be configured to display the operator on the page at which the event is detected.

According to a twelfth aspect of the present disclosure, in the information processing system according to any one of the first to tenth aspects, the processor may be configured to display the operator on an additional page inserted before or after the page at which the event is detected.

According to a thirteenth aspect of the present disclosure, in the information processing system according to any one of the first to tenth aspects, the processor may be configured to display attribute information of the second document, in response to a request from the viewer.

According to a fourteenth aspect of the present disclosure, in the information processing system according to the thirteenth aspect, the attribute information may include information on the system that manages the first document associated with each page of the second document, the information for specifying the location at which the first document exists, and information on the person in charge.

According to a fifteenth aspect of the present disclosure, in the information processing system according to any one of the first to tenth aspects, the processor may be configured to search for a current person in charge of the first document, from the system that manages the first document at which the event is detected.

According to a sixteenth aspect of the present disclosure, there is provided a program causing a computer to realize a function of managing a second document in which information for specifying a location at which a first document managed by the information processing system or another system exists is associated with a page in an arrangement order, and a function of displaying, when the second document is browsed, in a case where the first document associated with the page to be browsed is read and provided to a viewer, an operator requesting a person in charge to resolve an event that the first document is not read on a screen used for browsing when the event is detected.

According to a seventeenth aspect of the present disclosure, there is provided an information processing method including managing a second document in which information for specifying a location at which a first document managed by the information processing system or another system exists is associated with a page in an arrangement order, and displaying, when the second document is browsed, in a case where the first document associated with the page to be browsed is read and provided to a viewer, an operator requesting a person in charge to resolve an event that the first document is not read on a screen used for browsing when the event is detected.

According to the first aspect of the present disclosure, as compared with a case where an error associated with browsing the bundle document is resolved by an individual inquiry by an individual user, it is possible to improve efficiency of a work required for resolving the error.

According to the second aspect of the present disclosure, it is possible to request the person in charge from the browsing screen that the first document to be read does not exist at the designated location.

According to the third aspect of the present disclosure, the person in charge can be requested to designate a document to be displayed as a substitute from the browsing screen.

According to the fourth aspect of the present disclosure, even in a case where the link is broken due to movement or the like, the person in charge can be requested to update the location at which the original document exists from the browsing screen.

According to the fifth aspect of the present disclosure, it is possible to request the person in charge to grant the access right to the system that manages the first document to be read.

According to the sixth aspect of the present disclosure, it is possible to request the granting of the access right to the system from the screen used for browsing.

According to the seventh aspect of the present disclosure, the viewer can try a possibility of access.

According to the eighth aspect of the present disclosure, the person in charge can be requested to grant the access right to the first document to be read.

According to the ninth aspect of the present disclosure, the granting of the access right to the first document can be requested from the screen used for browsing.

According to the tenth aspect of the present disclosure, the viewer can try a possibility of access.

According to the eleventh aspect of the present disclosure, the operator can be operated as it is from the page to be browsed.

According to the twelfth aspect of the present disclosure, the operator can be displayed as it is before reaching the page to be browsed.

According to the thirteenth aspect of the present disclosure, without browsing the second document, a structure of the document can be easily confirmed.

According to the fourteenth aspect of the present disclosure, without browsing the second document, a structure of the document can be easily confirmed.

According to the fifteenth aspect of the present disclosure, even in a case where a registered person in charge and a current person in charge are different from each other, it is possible to reliably request the resolution of the error.

According to the sixteenth aspect of the present disclosure, as compared with a case where an error associated with browsing the bundle document is resolved by an individual inquiry by an individual user, it is possible to improve efficiency of a work required for resolving the error.

According to the seventeenth aspect of the present disclosure, as compared with a case where an error associated with browsing the bundle document is resolved by an individual inquiry by an individual user, it is possible to improve efficiency of a work required for resolving the error.

### BRIEF DESCRIPTION OF THE DRAWINGS

Exemplary embodiment(s) of the present invention will be described in detail based on the following figures, wherein:
Fig. 1 is a diagram illustrating a configuration example of a document browsing system used in Exemplary Embodiment 1;
Figs. 2A and 2B are diagrams illustrating an example of a bundle document BD used in Exemplary Embodiment 1; and Fig. 2A illustrates an example of a data structure of the bundle document BD, and Fig. 2B illustrates an example of a method of viewing the bundle document BD at a terminal;
Figs. 3A and 3B are diagrams illustrating a configuration example on hardware of a document management system used in Exemplary Embodiment 1; and Fig. 3A illustrates an example of a hardware configuration, and Fig. 3B illustrates an example of a structure of data stored in an auxiliary storage apparatus;
Figs. 4A to 4C are diagrams illustrating an example of a structure of a database stored in the auxiliary storage apparatus; and Fig. 4A illustrates an example of a structure of the document DB, Fig. 4B illustrates an example of a structure of another system document information DB, and Fig. 4C illustrates an example of a structure of an authentication information DB;
Fig. 5 is a diagram illustrating a functional configuration example of the document management system used in Exemplary Embodiment 1;
Fig. 6 is a flowchart illustrating an example of a processing operation executed by the document management system when the bundle document BD is created;
Fig. 7 is a diagram illustrating an example of contents of communication executed between terminals constituting the document browsing system and a processing operation executed by each terminal in a case where the bundle document BD is created;
Fig. 8 is a flowchart illustrating an example of a processing operation executed by the document management system when the bundle document BD is browsed;
Fig. 9 is a diagram illustrating an example of contents of communication executed between the terminals constituting the document browsing system and a processing operation executed by each terminal in a case where the bundle document BD is browsed;
Figs. 10A to 10C are diagrams illustrating a display example of a login page displayed when authentication fails in a case where sub-documents on fourth to sixth pages from a head are managed by another system; and Fig. 10A illustrates an example of embedding the login page on a page designated by a user, Fig. 10B illustrates an example of embedding the login page on pages in which a plurality of pages for which authentication fails are put together, and Fig. 10C illustrates an example of inserting the login page immediately before or after a page designated by the user;
Fig. 11 is a diagram illustrating a display example of the login page;
Fig. 12 is a diagram illustrating a display example of a substitute document request page;
Fig. 13 is a diagram illustrating an example of a screen displayed on a terminal operated by an owner who is requested to select a substitute document;
Fig. 14 is a diagram illustrating a display example of properties of the bundle document BD;
Fig. 15 is a diagram illustrating a functional configuration example of a document management system used in Second Exemplary embodiment 2;
Fig. 16 is a flowchart illustrating another example of a processing operation executed by the document management system when the bundle document BD is browsed;
Fig. 17 is a diagram illustrating another example of the contents of communication executed between the terminals constituting the document browsing system and the processing operation executed by each terminal in a case where the bundle document BD is browsed;
Fig. 18 is a diagram illustrating a display example of an access permission request page;
Fig. 19 is a diagram illustrating an example of a screen displayed on a terminal operated by an owner who is requested to have access permission; and
Fig. 20 is diagrams illustrating an example of an operation screen displayed in a case where the present system does not support a file format of a target document; and (A) of Fig. 20 illustrates a screen displayed in a case where the target document cannot be displayed since the file format is not supported, and (B) of Fig. 20 illustrates a screen displayed in a case where the target document is opened.

### DETAILED DESCRIPTION OF THE INVENTION

Hereinafter, exemplary embodiments of the present invention will be described with reference to drawings.

### <Exemplary Embodiment 1>

### <System Configuration>

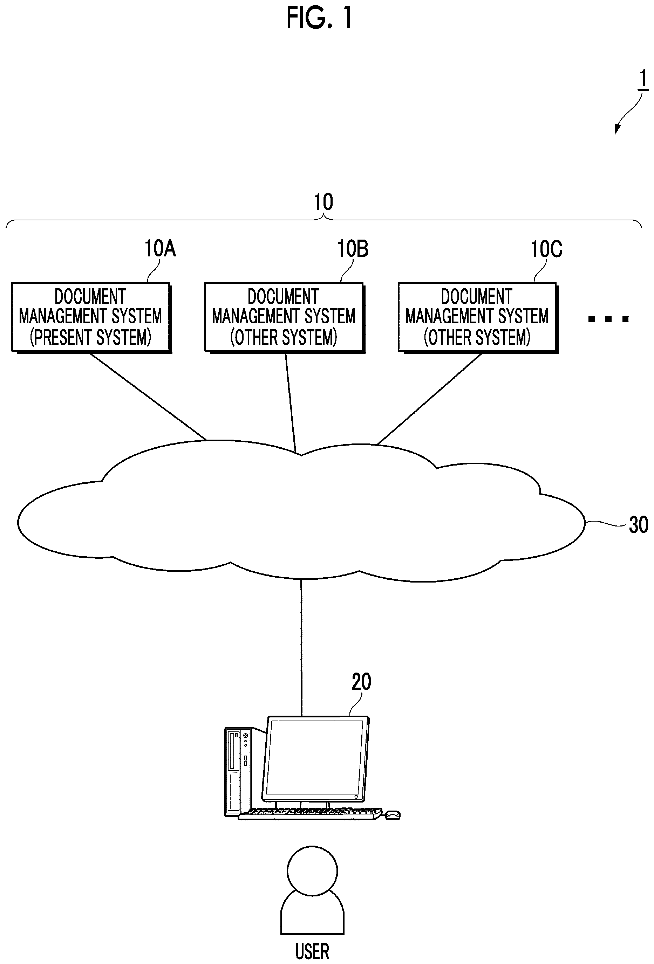

Fig. 1 is a diagram illustrating a configuration example of a document browsing system 1 used in Exemplary Embodiment 1.

The document browsing system 1 illustrated in Fig. 1 is configured with a plurality of document management systems 10, a terminal 20 for work, and a network 30.

In Fig. 1, a document management system 10A that manages bundle documents is referred to as the "present system", and document management systems 10B, 10C, and the like that manage a document constituting the bundle documents are referred to as "other system"s. Meanwhile, some or all of the documents constituting the bundle document may be managed by the present system.

Since the present system and the other systems are defined based on the bundle document browsed by a user, in a case where the bundle document browsed by the user is in the document management system 10B, the document management system 10B becomes the present system.

In the following, in a case where the present system and the other systems are not distinguished, the present system and the other systems are referred to as the document management system 10, and in a case where the present system and the other systems are distinguished, the present system and the other systems are referred to as the document management systems 10A, 10B, 10C and the like.

In Fig. 1, there is one terminal 20, and in the actual document browsing system 1, a plurality of terminals 20 are connected to the network 30. The number of terminals 20 does not have to be one for one user, and the number of terminals 20 may be a plurality of terminals for one user. Further, the number of terminals 20 may be one for a plurality of users.

As the network 30, for example, the Internet is used. Meanwhile, the network 30 may be a local area network (LAN).

### <Bundle Document>

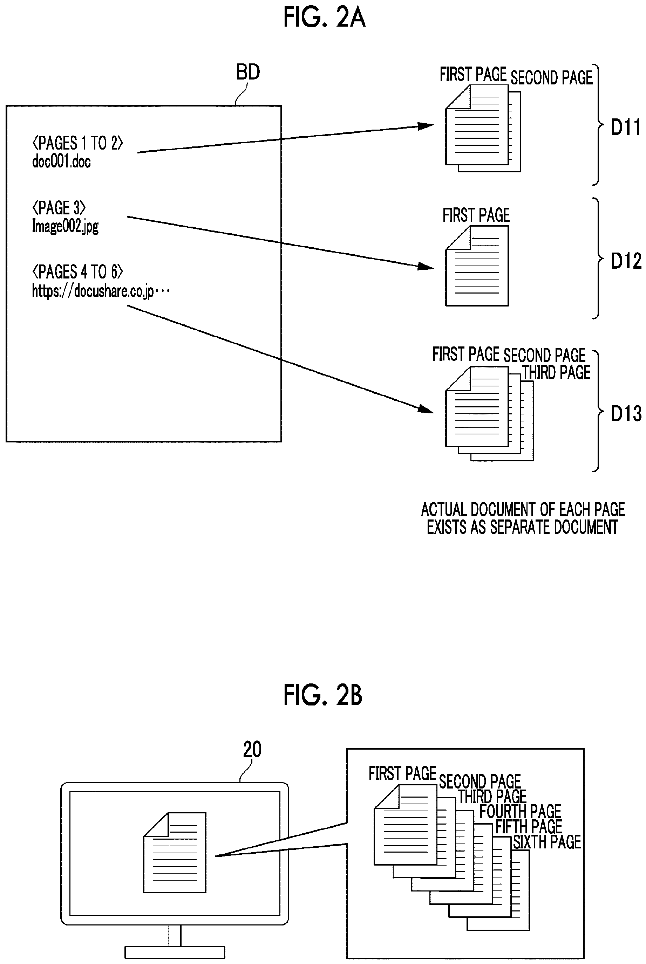

Fig. 2 is a diagram illustrating an example of a bundle document BD used in Exemplary Embodiment 1. Fig. 2A illustrates an example of a data structure of the bundle document BD, and Fig. 2B illustrates an example of a method of viewing the bundle document BD at the terminal 20.

The bundle document BD illustrated in Fig. 2 is defined by a set of pieces of link information to actual documents D11, D12, and D13 separately from the bundle document BD.

Meanwhile, the link information only for some of pages constituting the bundle document BD may be stored, and binary data may be stored for the other pages.

In the present exemplary embodiment, the pieces of link information are arranged in an order of appearance of the corresponding pages.

In Fig. 2A, the link information of the document D11 corresponding to the pages 1 and 2, the link information of the document D12 corresponding to the page 3, and the link information of the document D13 corresponding to the pages 4 to 6 are arranged in order.

A part of the documents D11, D12, and D13 constituting the bundle document BD may be another bundle document.

File formats of the documents D11, D12, and D13 linked to one bundle document BD do not have to be the same. For example, the documents D11 and D12 may be document files, and the document D13 may be an image file.

A difference between the file formats is represented by extensions. The extension representing the document file includes, for example, txt, doc, ppt, pdf. The extension representing the image file includes, for example, jpg, gif, bmp, and tiff.

For the link information, for example, a document name, a file name, a directory, a uniform resource locator (URL), and an identifier are used. The link information may be such that a document which is a link destination can be uniquely specified.

Contents of the page of the bundle document BD is specified by the document which is a link destination. Therefore, in a case where the link information is rewritten, the content of the corresponding page of the bundle document BD is also changed. Further, even in a case where the link information is not changed, the content of the corresponding page of the bundle document BD is also changed in a case where the content of the document which is a link destination is edited or replaced with another document.

The contents of the bundle document BD displayed on the terminal 20 can also be changed by changing, adding, or deleting the order of the pieces of link information.

Since the documents D11, D12, and D13 exist independently of the bundle document BD, even in a case where the content of the bundle document BD on a display is changed by editing the link information, the documents D11, D12, and D13 which are link destinations are not changed.

The document management system 10 (see Fig. 1) manages the bundle document BD and the documents D11, D12, and D13 constituting the bundle document BD without distinction.

In the following, in a case where the bundle document BD and the documents D11, D12, and D13 constituting the bundle document BD are collectively referred to as "documents".

Further, the documents D11, D12, and D13 constituting the bundle document BD are also referred to as "sub-documents".

In a case of browsing the bundle document BD, the sub-documents corresponding to each page of the bundle document BD are read through the link information, and displayed on the terminal 20.

On the screen of the terminal 20 illustrated in Fig. 2B, in a case where a document to be browsed is the bundle document BD, a serial number is assigned regardless of a difference between the sub-documents corresponding to each page.

Therefore, the user who browses the bundle document BD does not know whether or not each page is read through the link information.

The bundle document BD here is an example of a second document, and the sub-document is an example of a first document.

### <Configuration of Document Management System>

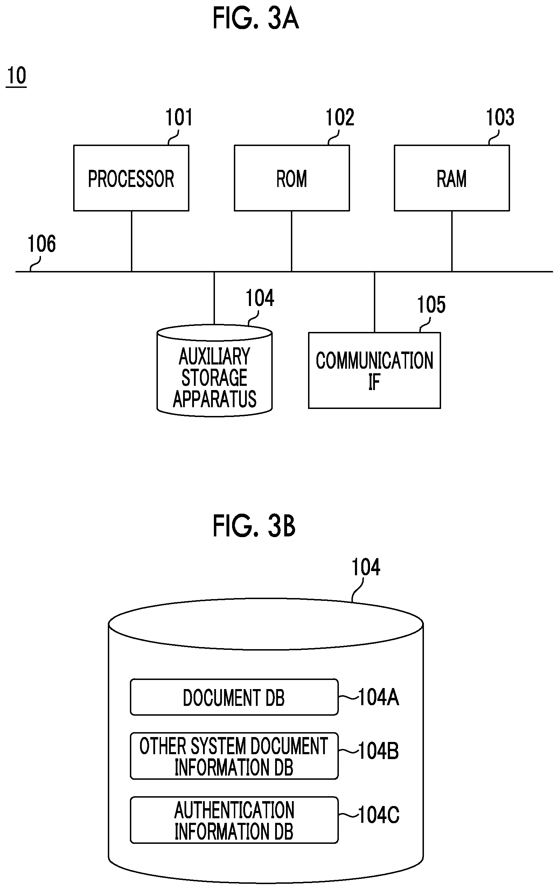

Figs. 3A and 3B are diagrams illustrating a configuration example on hardware of the document management system 10 used in Exemplary Embodiment 1. Fig. 3A illustrates an example of a hardware configuration, and Fig. 3B illustrates an example of a structure of data stored in an auxiliary storage apparatus 104.

The document management system 10 illustrated in Fig. 3A includes a processor 101 that controls an operation of the entire apparatus, a read only memory (ROM) 102 that stores a basic input output system (BIOS) and the like, a random access memory (RAM) 103 that is used as a work area of the processor 101, an auxiliary storage apparatus 104 that stores data such as a program, and a communication interface (IF) 105 that is used for communication with the outside.

The processor 101 and each unit are connected to each other through a signal line 106 such as a bus.

The document management system 10 here is an example of an information processing system.

The processor 101, the ROM 102, and the RAM 103 function as so-called computers.

The processor 101 realizes various types of functions through the program being executed. For example, the processor 101 provides a document management service, through the program being executed.

For the auxiliary storage apparatus 104, for example, a semiconductor memory and a hard disk apparatus are used. Data related to the program or the document management service is stored in the auxiliary storage apparatus 104. The program here also includes an application program related to an operating system or the document management service.

As data related to document management, the auxiliary storage apparatus 104 stores a database (hereinafter, referred to as a "document DB") 104A that stores information on documents managed by the present system, and a database (hereinafter, referred to as an "other system document information DB") 104B that stores information on documents managed by other systems, and a database (hereinafter, referred to as an "authentication information DB") 104C that stores information related to authentication (hereinafter, also referred to as "authentication information") requested when accessing the system or the document.

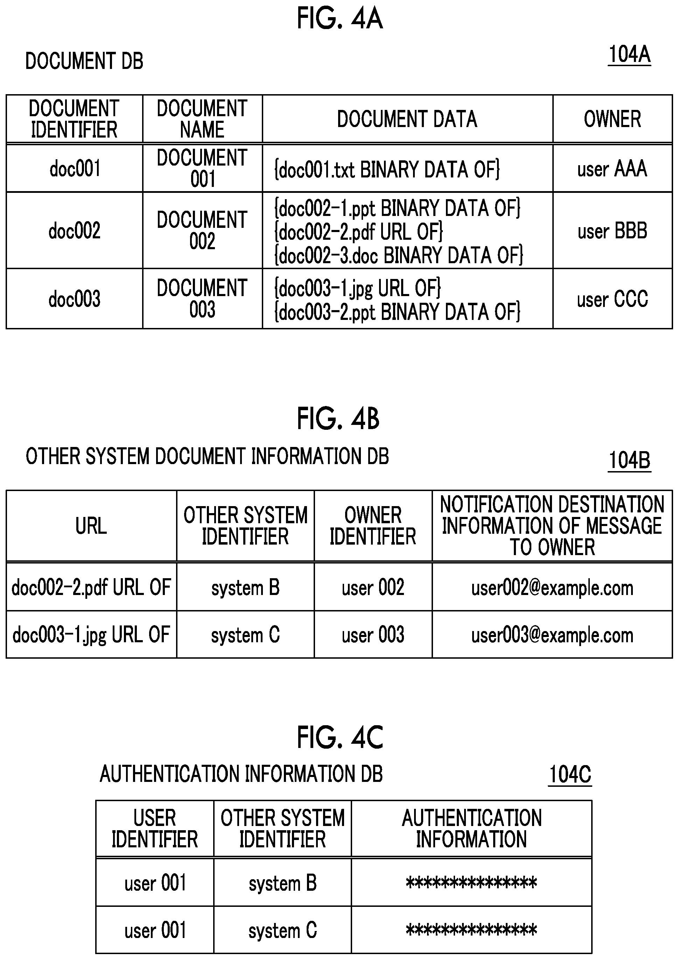

Figs. 4A to 4C are diagrams illustrating an example of a structure of a database stored in the auxiliary storage apparatus 104. Fig. 4A illustrates an example of a structure of the document DB 104A, Fig. 4B illustrates an example of a structure of the other system document information DB 104B, and Fig. 4C illustrates an example of a structure of an authentication information DB 104C.

In the document DB 104A, the bundle document BD and other documents are managed without distinction. In the document DB 104A, the respective documents are managed by one record.

The document DB 104A manages the documents by a "document identifier", a "document name", "document data", an "owner", and the like to be used for managing the document.

For example, "document 001" on the first line is a single document.

In a case of the bundle document BD, a bundle structure is also included in a field of "document data". In the example in Fig. 4A, "document 002" and "document 003" are the bundle documents BD.

In the field of "document data", information for specifying sub-documents constituting the bundle document BD is described in an arrangement order. In Fig. 4A, a URL and binary data are included in the field of "document data". An internet protocol (IP) address may be stored instead of the URL.

In a field of "owner", information on an owner of each document to be managed is stored. The user here may be an individual or a group name.

Further, the owner is not limited to one person, and may be a plurality of owners. A creator or an administrator may be stored instead of the owner. The owner, the creator, and the administrator here are examples of persons in charge of managing documents.

In Fig. 4A, the owners of the respective documents are different from each other. Of course, a plurality of documents may belong to the same owner.

The other system document information DB 104B manages information related to sub-documents managed by the other system.

The other system document information DB 104B manages information related to the sub-documents by using a "URL" that specifies a location of a sub-document, an "other system identifier" that specifies another system, an "owner identifier" that identifies an owner, and "notification destination information of message to owner" which is a notification destination of a message addressed to the owner, and the like.

In a case where the IP address is used to specify the location of the sub-document, the IP address may be stored in the URL field or a field of the IP address field prepared separately. In the example in Fig. 4B, the URLs of the sub-documents constituting "document 002" and "document 003" are stored.

Information on the creator or the administrator may be stored in the field of "owner". In Fig. 4B, the owner of each sub-document is different from the owner of any of the documents managed by the document DB 104A.

For example, an e-mail address, a short message address, a telephone number, and the like are stored in a field of "notification destination information of message to owner".

The authentication information DB 104C manages authentication information to be used for accessing the sub-document or accessing the system in which the sub-document is managed.

The authentication information DB 104C manages the authentication information by using a "user identifier" that specifies a user, an "other system identifier" that is used for managing other systems, and "authentication information" that is requested to access the sub-document or the system.

For example, an identifier (ID) or a password are encrypted and stored in a field of "authentication information". The authentication information may be a plaintext.

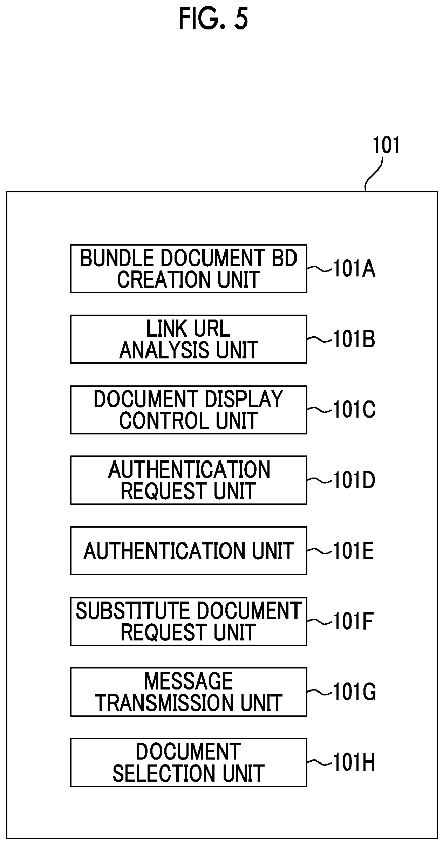

Fig. 5 is a diagram illustrating a functional configuration example of the document management system 10 used in Exemplary Embodiment 1. The function illustrated in Fig. 5 is realized through execution of a program by the processor 101.

The processor 101 illustrated in Fig. 5 functions as a bundle document creation unit 101A, a link URL analysis unit 101B, a document display control unit 101C, an authentication request unit 101D, an authentication unit 101E, a substitute document request unit 101F, a message transmission unit 101G, and a document selection unit 101H.

The bundle document creation unit 101A is executed in a case where the terminal 20 instructs creation of the bundle document BD. The bundle document creation unit 101A has a sub-function of supporting the creation of the bundle document BD and a sub-function of registering data of the created bundle document BD in the document DB 104A (see Fig. 3).

In the sub-function that supports the creation of the bundle document BD, an array of the "document identifier" which is information on the sub-document or a URL which is link information to the "other system" (hereinafter, referred to as "link URL") is accepted, through a work screen of the terminal 20.

On the other hand, the sub-function for registering the created bundle document BD data in the document DB 104A registers data of the created bundle document BD in the document DB 104A.

The bundle document creation unit 101A also has a sub-function of instructing the link URL analysis unit 101B to analyze the link URL. This sub-function is executed in a case where the bundle document BD includes the link URL.

The link URL analysis unit 101B is executed in a case where an instruction for analysis of the link URL is accepted from the bundle document creation unit 101A. By accessing the document DB 104A of the other system, the link URL analysis unit 101B specifies information such as an owner of a sub-document corresponding to the link URL and registers the information in the other system document information DB 104B.

The link URL analysis unit 101B also registers notification destination information of a message addressed to the owner in the other system document information DB 104B.

The document display control unit 101C is executed in a case where the terminal 20 instructs to brows a document managed by the document DB 104A. The document here includes not only the bundle document BD but also documents other than the bundle document BD.

The document display control unit 101C has a sub-function of accepting designation of a document to be browsed and a sub-function of outputting data of the designated specific page to the terminal 20, through the operation screen of the terminal 20.

For example, the document identifier or the document name is used to designate the document to be browsed. In addition, a page number is used to designate a page to be displayed.

In a case where the link URL is registered in association with the designated specific page, the document display control unit 101C executes a sub-function of acquiring a sub-document from a location specified by the link URL.

In a case where authentication is requested to access the other system, the document display control unit 101C also executes a sub-function of reading authentication information from the authentication information DB 104C and executing the authentication.

In a case where the authentication fails, the document display control unit 101C displays a page (hereinafter, referred to as a "login page") that requests the user to input information necessary for the authentication (hereinafter, referred to as "authentication information") on the terminal 20.

In a case where the authentication is successful and a target document does not exist, a page for requesting the owner registered for the document of the link URL to present a substitute document (hereinafter, referred to as "substitute document request page") is displayed on the terminal 20.

In the present exemplary embodiment, the document for which authentication is requested is assumed to be a document managed by the other system. Meanwhile, even the document managed by the present system may request authentication.

The authentication request unit 101D has a sub-function of instructing the authentication unit 101E to transmit authentication information.

The authentication information in the present exemplary embodiment is given by another system identifier specified by a link URL or the like, and a user identifier and password input through the authentication request page.

In a case where the authentication is successful, the authentication request unit 101D updates the display of the corresponding page of the terminal 20 according to the acquired document. Further, the authentication request unit 101D encrypts and accumulates the authentication information in the authentication information DB 104C.

In a case where the authentication fails, the authentication request unit 101D causes the terminal 20 to display the login page again.

In a case where the authentication is successful and the target document does not exist, the authentication request unit 101D displays the substitute document request page on the terminal 20.

In a case of accessing the other system, the authentication unit 101E transmits the authentication information to the authentication unit 101E of the other system, and acquires a result of the authentication.

In a case of receiving the authentication information from the other system, the authentication unit 101E collates the received authentication information with data of the authentication information DB 104C, and returns the collation result.

The substitute document request unit 101F acquires information such as the owner of the document corresponding to the link URL of the page number designated from the other system document information DB 104B, and requests the message transmission unit 101G to transmit a message requesting a substitute document. The transmission of this message is executed in a case where the substitute document is requested from the terminal 20.

In a case where the substitute document is designated by the owner or the like, the substitute document request unit 101F updates the corresponding page of the terminal 20 to display the substitute document.

The message transmission unit 101G transmits a message requesting a substitute document to a destination read from the other system document information DB 104B. In a case of the document managed by the present system, the message transmission unit 101G may transmit the message requesting the substitute document to the owner or the like of the document of the present system.

The document selection unit 101H executes a sub-function of providing a screen for selecting the substitute document to the user who requests the substitute document. In the present exemplary embodiment, a list screen is used for selecting the substitute document.

In a case where the selection of the substitute document is accepted, the document selection unit 101H transmits the link URL of the document to the bundle document creation unit 101A that manages the target document, and updates a configuration of the bundle document BD.

### <Processing Operation>

### <Creation of Bundle Document>

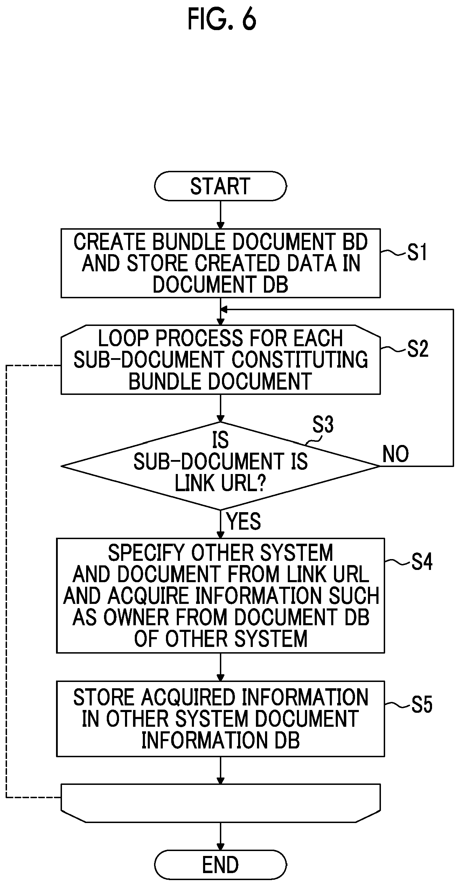

Fig. 6 is a flowchart illustrating an example of a processing operation executed by the document management system 10 when the bundle document BD is created. A symbol S illustrated in Fig. 6 represents a step.

The processing operation illustrated in Fig. 6 is executed in a case where the processor 101 accepts creation of the bundle document BD from the terminal 20.

First, the processor 101 creates the bundle document BD, and stores the created data in the document DB 104A (step S1).

Next, the processor 101 loops the process for each sub-document constituting the bundle document BD (step S2).

The processor 101 determines whether or not the sub-document is a link URL (step S3).

In a case where the sub-document is real data, the processor 101 obtains a negative result in step S3, and returns to step S2. The processor 101 repeats the determination in step S3 while the undetermined sub-document remains.

In a case where the sub-document is the link URL, processor 101 obtains a positive result in step S3. In this case, the processor 101 specifies another system and a document from the link URL, and acquires information such as the owner from the document DB 104A of the other system (step S4).

Next, the processor 101 stores the acquired information in the other system document information DB 104B (step S5). After this, the processor 101 returns to step S2.

In a case where there are no undetermined sub-documents, the processor 101 ends the loop process.

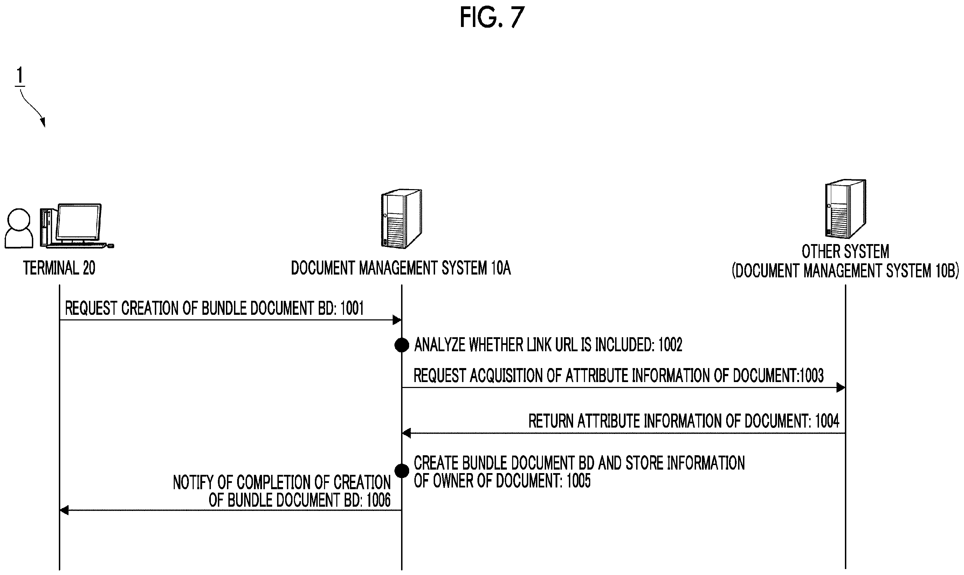

Fig. 7 is a diagram illustrating an example of contents of communication executed between terminals constituting the document browsing system 1 and a processing operation executed by each terminal in a case where the bundle document BD is created.

In Fig. 7, the document management system 10 that accepts a request for creating the bundle document BD is set as the document management system 10A, and another system that manages sub-documents constituting the bundle document BD to be created is set as the document management system 10B.

The user of the document management service accesses the document management system 10A from the terminal 20, and requests the creation of the bundle document BD (step S1001) .

The document management system 10A that accepts the request analyzes whether a link URL is included (step S1002) . In a case where a document including the link URL exists, the document management system 10A requests another system specified by the link URL to acquire attribute information of the document (step S1003).

The other system that accepts the request returns the attribute information of the document to the document management system 10A (step S1004).

The document management system 10A that receives the attribute information of the document from the other system creates the bundle document BD, and stores information of the owner of the document (step S1005).

After that, the document management system 10A notifies the terminal 20 of creation completion of the bundle document BD (step S1006).

### <Browsing of Bundle Document>

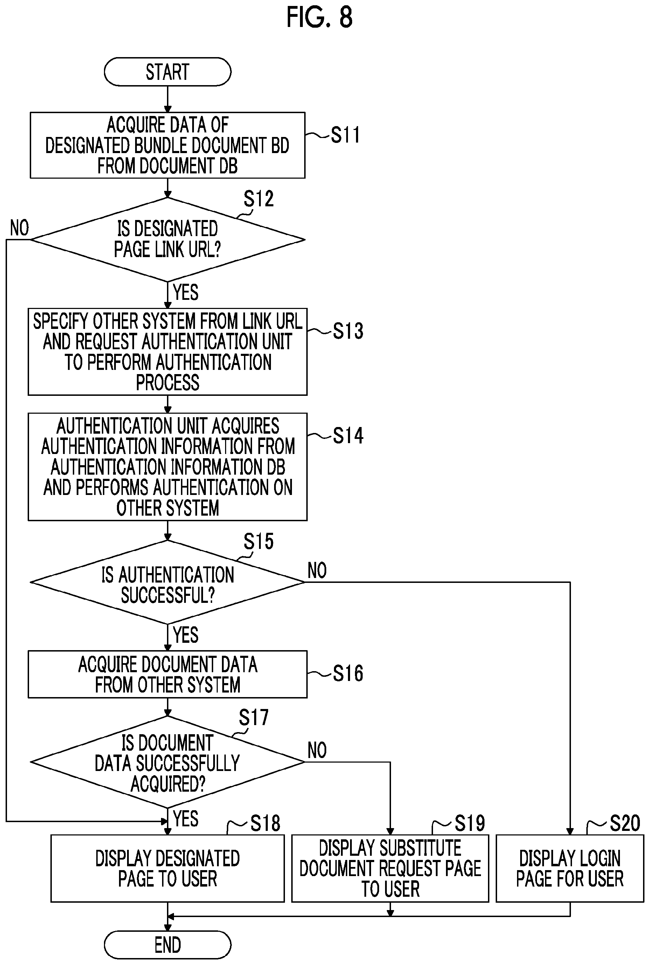

Fig. 8 is a flowchart illustrating an example of a processing operation executed by the document management system 10 when a bundle document is browsed. The symbol S illustrated in Fig. 8 represents a step.

The processing operation illustrated in Fig. 8 is executed in a case where the processor 101 accepts a browsing instruction from the terminal 20.

First, the processor 101 acquires data of the designated bundle document BD from the document DB 104A (step S11).

Next, the processor 101 determines whether or not the designated page is a link URL (step S12).

In a case where a negative result is obtained in step S12, the processor 101 proceeds to step S18, and displays the designated page to the user.

On the other hand, in a case where a positive result is obtained in step S12, the processor 101 specifies another system from the link URL, and requests the authentication unit 101E to perform an authentication process (step S13).

Subsequently, the processor 101 causes the authentication unit 101E to acquire authentication information from the authentication information DB 104C, and authenticate the other system (step S14).

After that, the processor 101 determines whether or not the authentication is successful (step S15).

In a case where the authentication fails, the processor 101 obtains a negative result in step S15. In this case, the processor 101 proceeds to step S20, and displays a login page for the user.

On the other hand, in a case where the authentication is successful, the processor 101 obtains a positive result in step S15. In this case, the processor 101 acquires document data from the other system (step S16).

After that, the processor 101 determines whether or not the document data is successfully acquired (step S17). In other words, the processor 101 determines whether or not the document data to be acquired exists at a link destination.

In a case where the document data is successfully acquired, the processor 101 obtains a positive result in step S17. In this case, the processor 101 displays the designated page to the user (step S18).

On the other hand, in a case where the acquisition of the document data fails, the processor 101 obtains a negative result in step S17. In this case, the processor 101 displays a substitute document request page to the user (step S19).

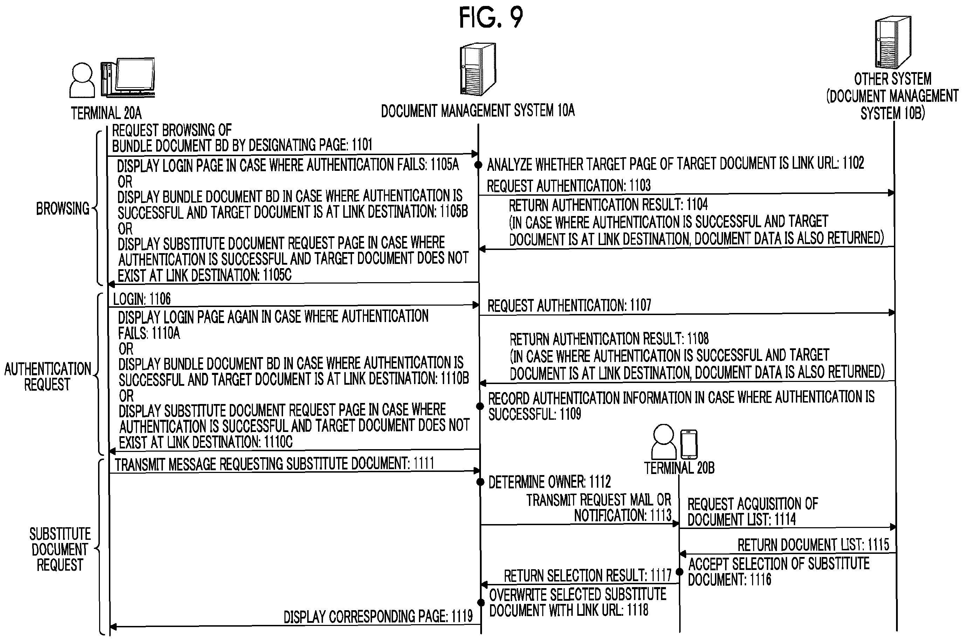

Fig. 9 is a diagram illustrating an example of contents of communication executed between terminals constituting the document browsing system 1 and a processing operation executed by each terminal in a case where the bundle document BD is browsed.

In Fig. 9, the document management system 10 that accepts a request for browsing the bundle document BD is set as the document management system 10A, and another system that manages sub-documents constituting the bundle document BD to be created is set as the document management system 10B. Further, in Fig. 9, the terminal 20 operated by a user who browses the bundle document BD is referred to as a "terminal 20A".

The user of a document management service accesses the document management system 10A from the terminal 20A, and requests for browsing the bundle document BD by designating a page (step S1101).

The document management system 10A that accepts the request analyzes whether a target page of a target document is a link URL (step S1102).

In a case where the target page is the link URL, the document management system 10A requests authentication to another system which is a link destination (step S1103).

The other system returns an authentication result to the document management system 10A, which is a request source (step S1104) . In a case where the authentication is successful and the target document is at the link destination, document data is also returned.

After that, the document management system 10A displays a screen according to the authentication result on the terminal 20A, which is a request source.

In a case where the authentication fails, the document management system 10A displays a login page on the terminal 20A (step S1105A).

In a case where the authentication is successful and the target document is at the link destination, the document management system 10A displays the bundle document BD on the terminal 20A (step S1105B).

In a case where the authentication is successful and the target document does not exist at the link destination, the document management system 10A displays a substitute document request page on the terminal 20A (step S1105C).

In a case where the login page is displayed, the terminal 20A logs in to the document management system 10A by inputting authentication information on the login page (step S1106). That is, the terminal 20A transmits the authentication information to the document management system 10A.

The document management system 10A that receives the authentication information requests authentication to the other system (step S1107).

The other system returns an authentication result to the document management system 10A, which is a request source (step S1108) . In a case where the authentication is successful and the target document is at the link destination, the document data is also returned.

In a case where the authentication is successful, the document management system 10A records the authentication information (step S1109).

After that, the document management system 10A displays a screen according to the authentication result on the terminal 20A, which is a request source.

In a case where the authentication fails, the document management system 10A displays the login page again (step S1110A).

In a case where the authentication is successful and the target document is at the link destination, the document management system 10A displays the bundle document BD (step S1110B).

In a case where the authentication is successful and the target document does not exist at the link destination, the document management system 10A displays a substitute document request page (step S1110C).

In a case where the substitute document request page is displayed, the terminal 20A transmits a message requesting a substitute document to the document management system 10A through an operation on the substitute document request page (step S1111).

The document management system 10A that receives the substitute document request determines the owner (step S1112) .

In a case where the owner is confirmed, the document management system 10A transmits a request mail or a notification to the confirmed owner (step S1113) . In Fig. 9, the owner is assigned to the terminal 20B.

The owner requests the other system from the terminal 20B to acquire a document list (step S1114).

The other system returns the document list to the terminal 20B, which is a request source (step S1115).

The terminal 20B accepts selection of the substitute document by the owner (step S1116).

After that, the terminal 20B returns the selection result to the document management system 10A (step S1117).

The document management system 10A overwrites the selected substitute document with the link URL (step S1118).

After that, the document management system 10A displays the corresponding page on the terminal 20A (step S1119).

### <Terminal Screen Example>

### <Display Example of Login Page>

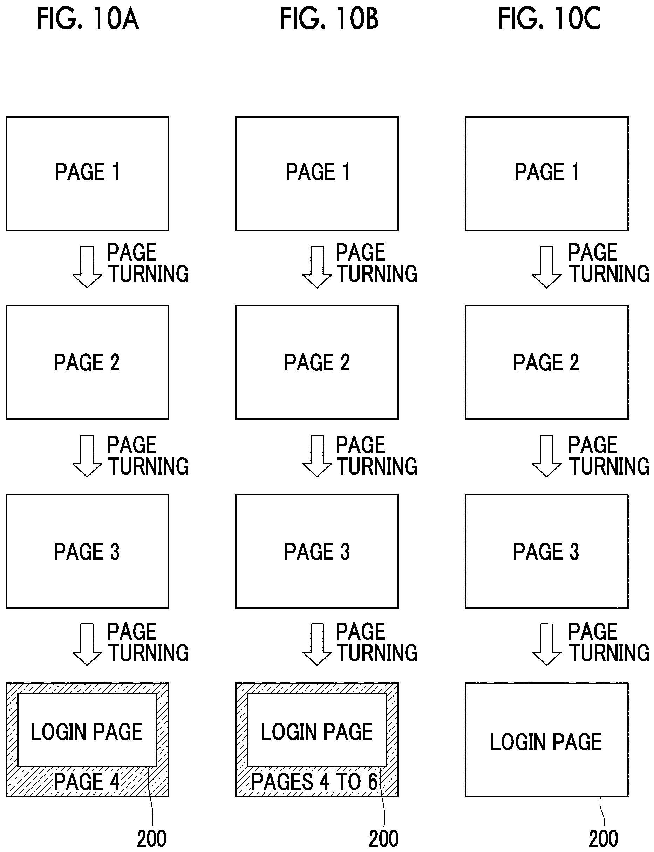

Figs. 10A to 10C are diagrams illustrating a display example of a login page 200 displayed when authentication fails in a case where sub-documents on fourth to sixth pages from a head are managed by another system. Fig. 10A illustrates an example of embedding the login page 200 on a page designated by a user, Fig. 10B illustrates an example of embedding the login page 200 on pages in which a plurality of pages for which authentication fails are put together, and Fig. 10C illustrates an example of inserting the login page 200 immediately before or after a page designated by the user.

A case where the login page 200 is displayed includes a case where the user does not have an access right to a system that manages a sub-document and a case where the access right of the user is expired.

The login page 200 illustrated in Fig. 10C is an example of an "additional page".

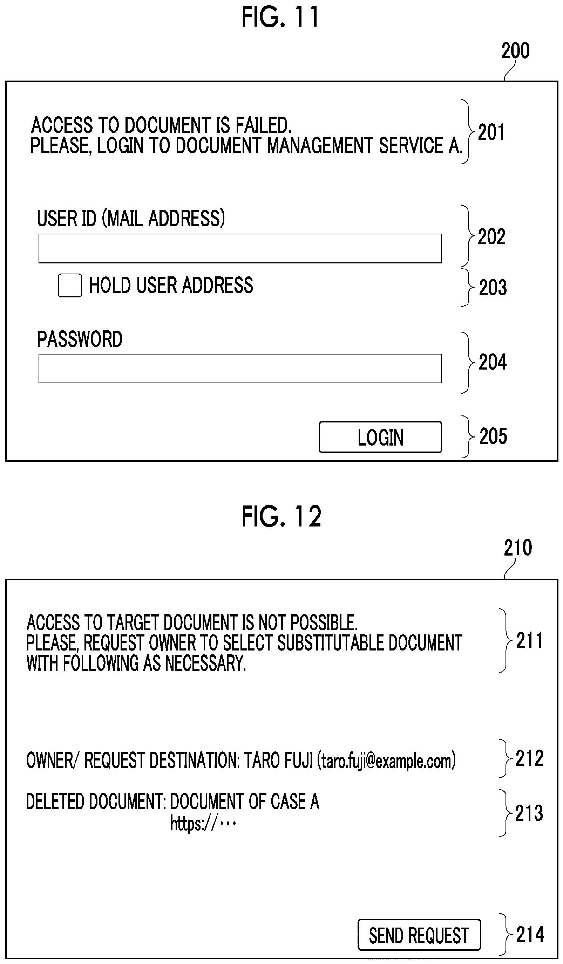

Fig. 11 is a diagram illustrating a display example of the login page 200.

The login page 200 illustrated in Fig. 11 has an explanation field 201 for a cause requiring login and an operation required of the user, an input field 202 for a user ID as an account to be used for authentication, a confirmation field 203 for holding the user ID, an input field 204 for a password, and a "login" button 205.

Since the login page 200 illustrated in Fig. 11 is displayed in a format of being embedded in the corresponding page of the bundle document BD being browsed, the user can immediately shift to an authentication work. That is, it is possible to efficiently resolve inability for browsing.

In a case where the login page 200 is not displayed in the format embedded in the corresponding page, the user needs to individually request permission from the owner or the administrator of the sub-document by a telephone or an e-mail, which is poor in workability.

Further, in the present exemplary embodiment, in a case where the authentication is successful, the subsequent authentication for the system associated with the same link URL becomes unnecessary. Therefore, in a case where the login page 200 is used, operability of the user is improved as compared with a case where an error screen is popped up and displayed every time the page is turned.

In the present exemplary embodiment, a layout of the login page 200 differs depending on the document management service for which login is requested. Meanwhile, the login page 200 having the same layout may be prepared, regardless of a difference in the document management service.

In the explanation field 201 illustrated in Fig. 11, a service name for which login is requested is displayed. Therefore, the user who is browsing the bundle document BD can specifically know the service name for which input of authentication information is requested. Instead of the service name, a link URL, a system identifier, a document identifier, or the like may be displayed.

In a case where the "login" button 205 is operated, the authentication information input to the input fields 202 and 204 is transmitted to the document management system 10 that manages the bundle document BD being browsed.

### <Display Example of Substitute Document Request Page>

Fig. 12 is a diagram illustrating a display example of a substitute document request page 210.

The substitute document request page 210 illustrated in Fig. 12 is displayed in a case where authentication to a system is successful and a target document does not exist at a link destination.

The substitute document request page 210 illustrated in Fig. 12 includes an explanation field 211 for a cause requesting selection of a substitute document and an operation required of the user, an information field 212 for an owner of the corresponding page, and an information field 213 for the deleted sub-document, and a "send request" button 214.

The "send request" button 214 is an example of an operator used in a case of requesting the substitute document.

The substitute document request page 210 is also displayed in a format to be embedded in or added to the corresponding page, in the same manner as the login page 200 (see Fig. 11). That is, the display format illustrated in Fig. 10 is adopted.

Therefore, the user can shift to a work of requesting the substitute document from the corresponding page. That is, it is possible to efficiently resolve inability for browsing due to broken links or the like.

In a case where the substitute document request page 210 is not displayed in a format embedded in the corresponding page, the user needs to individually request the owner or the administrator of the sub-document to register the substitute document by a telephone or an e-mail, which is poor in workability.

Further, in the present exemplary embodiment, in a case where the substitute document is selected by the owner, information of the document management system 10 is updated by the substitute document. Therefore, in a case where the substitute document request page 210 is used, operability of the user is improved as compared with a case where the error screen is popped up and displayed every time the page is turned.

In the present exemplary embodiment, a layout of the substitute document request page 210 differs depending on the document management service that manages the sub-document. Meanwhile, the substitute document request page 210 having the same layout may be prepared, regardless of a difference in the document management service.

In the information fields 212 and 213 illustrated in Fig. 12, information on the owner and information on the sub-document that needs to be replaced are displayed. Therefore, the user who is browsing the bundle document BD can know in advance a person requesting the request.

In a case where the "send request" button 214 is operated, a request including information on the document for which the selection of the substitute document is requested is transmitted to the owner of the corresponding sub-document.

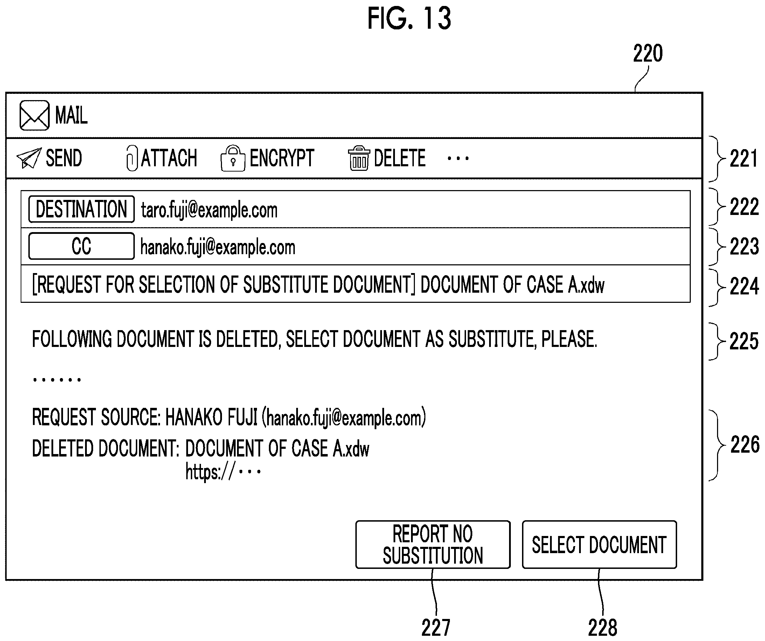

Fig. 13 is a diagram illustrating an example of a screen 220 displayed on the terminal 20B (see Fig. 9) operated by an owner who is requested to select a substitute document.

The screen 220 illustrated in Fig. 13 is assumed to be an operation screen of an application program for transmitting and receiving an e-mail. Therefore, operation buttons 221 are arranged in the first line. Further, an e-mail address 222 as a destination is disposed at the second line, and an e-mail address 223 as a transmission source is disposed at the third line. The destination here is an address of the owner of the substitute document.

On the fourth line, a title 224 issued by the document management system 10A (see Fig. 1) is described. In Fig. 13, the title 224 is configured with a content and information of a target document. The content is a "request for selection of substitute document", and the target document is "document of case A.xdw".

On the fifth line, a work 225 which is a reason why the e-mail is issued and required of the owner is described. In the example in Fig. 13, "deletion of document" is described as the reason why the e-mail is issued.

On the sixth line, information 226 for a request source or the target document is described. In this example, it can be seen that the user who is the request source is "Hanako Fuji".

On the seventh line, a "report no substitution" button 227 and a "select document" button 228 are arranged.

In a case where the substitute document does not exist, the owner of the document operates the "report no substitution" button 227. In a case where this button is operated, an e-mail notifying the document management system 10A, which is a transmission source, is returned.

In a case of selecting the substitute document, the owner of the document operates the "select document" button 228.

In a case where the "select document" button 228 is operated, display of a list of selectable documents is requested for another system that manages the corresponding document. As a result, the document list is displayed as a separate screen on the terminal 20B operated by the owner. In a case where the substitute document is selected from the displayed documents, a result of the selection is given to the document management system 10A, and the registered contents are updated.

Since the "report no substitution" button 227 and the "select document" button 228 are arranged in the mail, the work of the owner becomes efficient.

The process of requesting the owner to select the substitute document is an example of the process of requesting to designate a document to be displayed as a substitute.

### <Display Example of Property of Bundle Document>

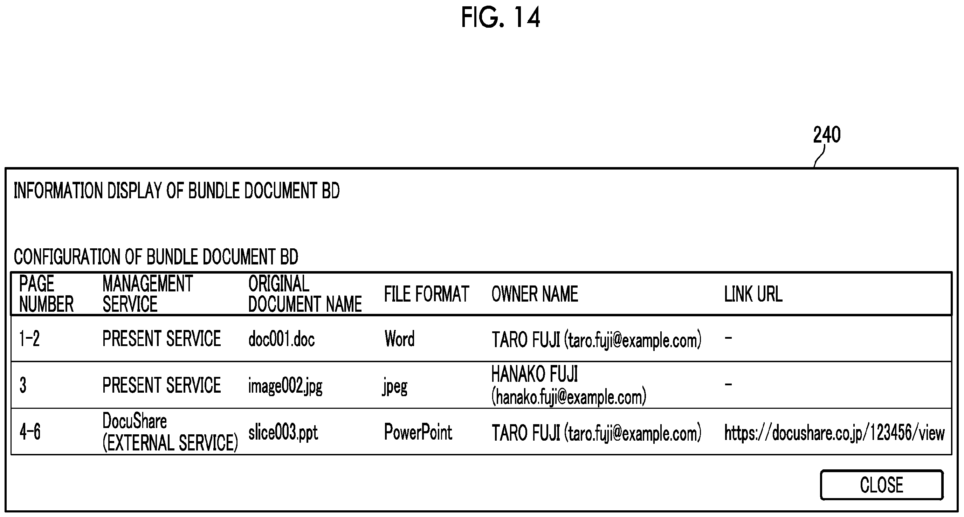

Fig. 14 is a diagram illustrating a display example of a property 240 of the bundle document BD.

The property 240 is attribute information used for confirming an internal structure of the bundle document BD.

The property 240 illustrated in Fig. 14 is configured with a "page number", a "management service", an "original document name", a "file format", an "owner name", and a "link URL".

By looking at a field of the "original document name", it is possible to confirm what kind of documents are bundled. In Fig. 14, it can be seen that three documents as sub-documents are bundled. In addition, by looking at a field of the "file format", it is also possible to see what file format each document has.

Further, in a case of looking at a field of the "management service", it is possible to see a system that manages each document. It is also possible to see which document is managed by the present system and which document is managed by another system.

In Fig. 14, a document managed by the present system is described as "this service", and a document managed by the other system is described with a name of an external service.

In the example in Fig. 14, it can be seen that the documents corresponding to the first to third pages are managed by the present system, and the documents corresponding to the fourth to sixth pages are managed by the other system. From the description in a field of the "link URL", it is possible to confirm that the document is managed by the other system.

Further, by looking at a field of the "owner name", it is possible to confirm an ownership of each document.

While the property 240 is displayed, a login to the other system may be verified in the background, and in a case where the login fails, an input field for login information may be displayed on the same screen. Further, the login page 200 (see Fig. 11) described above may be displayed in an embedded format or a pop-up format. In a case of requiring an input of the login information at this stage, a browsing interruption due to login failure is avoided beforehand.

In addition, access to the document managed by the other system may be verified in the background, and in a case where the access fails, a button for requesting a substitute document may be displayed on the same screen.

Further, the substitute document request page 210 (see Fig. 12) described above may be displayed in an embedded format or a pop-up format. In a case of requiring an input of the login information at this stage, a browsing interruption due to broken links or deletion of the target document is avoided beforehand.

### <Exemplary Embodiment 2>

A configuration of the document browsing system 1 (see Fig. 1) described in Exemplary Embodiment 2 is the same as the configuration of Exemplary Embodiment 1. Further, a hardware configuration of the document management system 10 (see Fig. 1) is the same as the hardware configuration of Exemplary Embodiment 1.

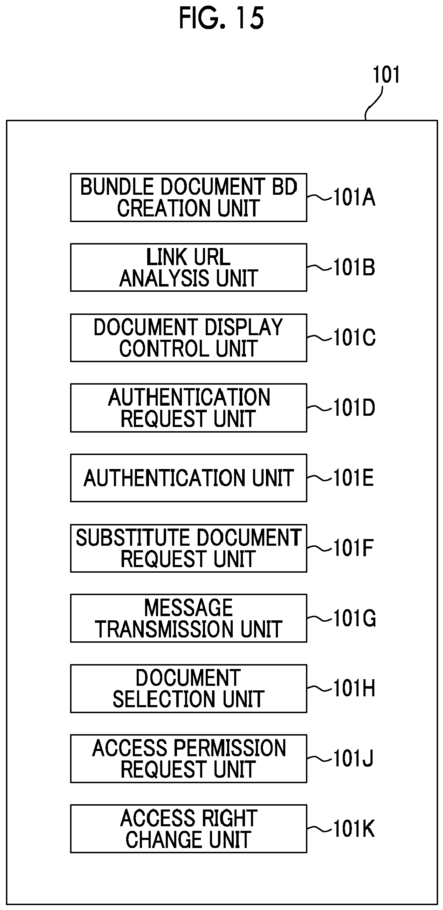

Fig. 15 is a diagram illustrating a functional configuration example of the document management system 10 used in Exemplary Embodiment 2. In Fig. 15, portions corresponding to the portions in Fig. 5 are illustrated with the corresponding reference numerals.

The processor 101 illustrated in Fig. 15 functions as the bundle document creation unit 101A, the link URL analysis unit 101B, the document display control unit 101C, the authentication request unit 101D, the authentication unit 101E, the substitute document request unit 101F, the message transmission unit 101G, the document selection unit 101H, an access permission request unit 101J, and an access right change unit 101K.

The access permission request unit 101J and the access right change unit 101K are added to the processor 101 used in the present exemplary embodiment.

The access permission request unit 101J acquires information of an owner of a document corresponding to a link URL corresponding to a designated page number, from the other system document information DB 104B.

Further, the access permission request unit 101J requests the message transmission unit 101G to transmit a message requesting the owner for access permission.

In a case where the owner selects the access permission, the access permission request unit 101J displays a page corresponding to the terminal 20A which is a request source.

In a case where the owner selects the access permission, the access right change unit 101K executes a change of the access right to the other system.

A URL for changing the access right differs for each document management system 10. Therefore, the access right change unit 101K reconstructs the URL of the corresponding document. The access right change unit 101K changes the access right by calling the changed URL.

Further, the access right change unit 101K notifies the substitute document request unit 101F of the selection result.

### <Processing Operation>

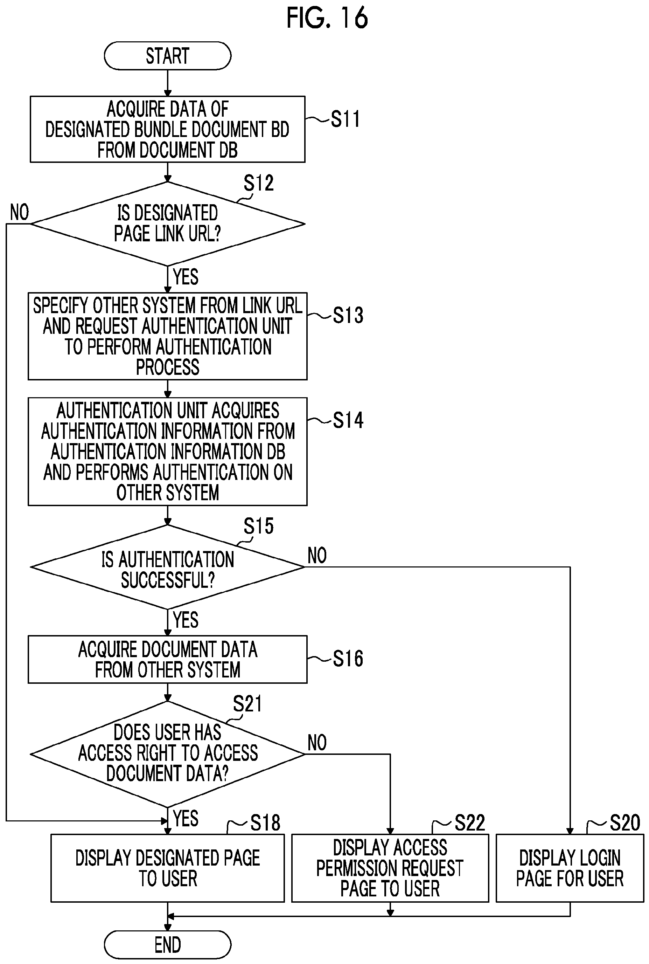

Fig. 16 is a flowchart illustrating another example of a processing operation executed by the document management system 10 when a bundle document is browsed. In Fig. 16, portions corresponding to the portions in Fig. 8 are illustrated with the corresponding reference numerals.

In a case of the processing operation illustrated in Fig. 16, after step S16, the processor 101 determines whether or not the user has an access right to access the document data (step S21).

In a case where the user has the access right to the designated page, the processor 101 obtains a positive result in step S21. In this case, the processor 101 proceeds to step S18, and displays the designated page to the user.

On the other hand, in a case where the user does not have the access right to the designated page, the processor 101 obtains a negative result in step S21. In this case, the processor 101 displays an access permission request page to the user (step S22).

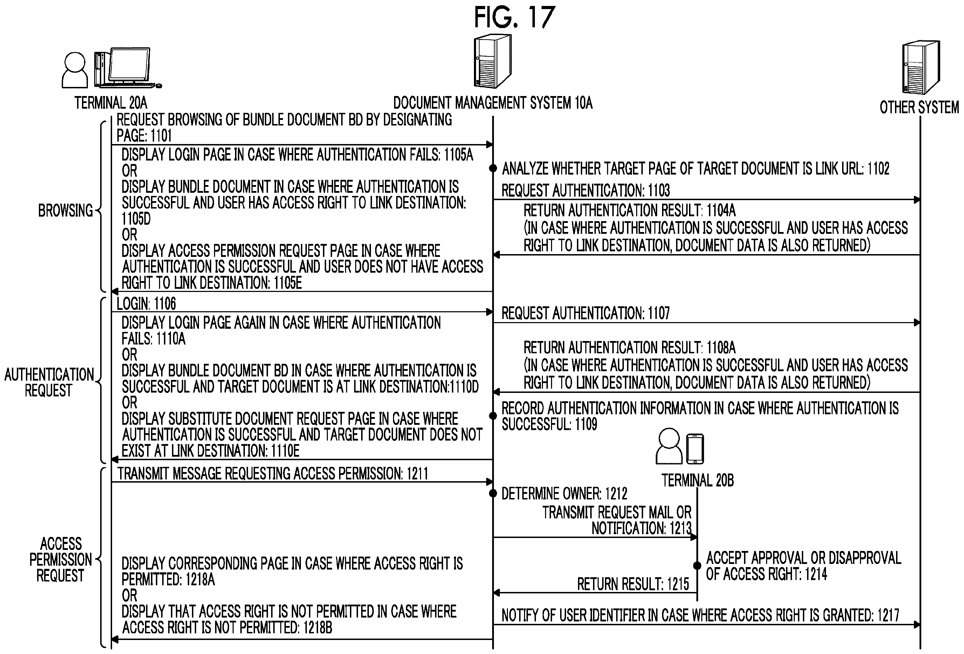

Fig. 17 is a diagram illustrating another example of the contents of communication executed between the terminals constituting the document browsing system 1 and the processing operation executed by each terminal in a case where the bundle document BD is browsed. In Fig. 17, portions corresponding to the portions in Fig. 9 are illustrated with the corresponding reference numerals.

A user of a document management service accesses the document management system 10A from the terminal 20A, and requests for browsing the bundle document BD by designating a page (step S1101).

The document management system 10A that accepts the request analyzes whether a target page of a target document is a link URL (step S1102).

In a case where the target page is the link URL, the document management system 10A requests authentication to another system which is a link destination (step S1103).

The other system returns an authentication result to the document management system 10A, which is a request source (step S1104A) . In a case where the authentication is successful and the user has an access right to the link destination, document data is also returned.

After that, the document management system 10A displays a screen according to the authentication result on the terminal 20A, which is a request source.

In a case where the authentication fails, the document management system 10A displays a login page on the terminal 20A (step S1105A).

In a case where the authentication is successful and the access right to the link destination is obtained, the document management system 10A displays the bundle document BD on the terminal 20A (step S1105D).

In a case where the authentication is successful and the access right to the link destination is not available, the document management system 10A displays an access permission request page on the terminal 20A (step S1105E).

In a case where the login page is displayed, the terminal 20A logs in to the document management system 10A by inputting authentication information on the login page (step S1106). That is, the terminal 20A transmits the authentication information to the document management system 10A.

The document management system 10A that receives the authentication information requests authentication to the other system (step S1107).

The other system returns an authentication result to the document management system 10A, which is a request source (step S1108A) . In a case where the authentication is successful and the user has an access right to the link destination, document data is also returned.

In a case where the authentication is successful, the document management system 10A records the authentication information (step S1109).

After that, the document management system 10A displays a screen according to the authentication result on the terminal 20A, which is a request source.

In a case where the authentication fails, the document management system 10A displays the login page again (step S1110A).

In a case where the authentication is successful and the access right to the link destination is obtained, the document management system 10A displays the bundle document BD (step S1110D) .

In a case where the authentication is successful and the access right to the link destination is not available, the document management system 10A displays an access permission request page (step S1110E).

In a case where the access permission request page is displayed, the terminal 20A transmits a message requesting access permission to the document management system 10A through an operation on the access permission request page (step S1211) .

The document management system 10A that receives the access permission request determines the owner (step S1212).

In a case where the owner is confirmed, the document management system 10A transmits a request mail or a notification to the confirmed owner (step S1213) . In Fig. 17, the owner is assigned to the terminal 20B.

In a case where the terminal 20B operated by the owner accepts an approval or disapproval of the access right (step S1214), the terminal 20B returns a result to the document management system 10A which is a transmission source (step S1215).

In a case where the access right is granted, the document management system 10A notifies the other system of a user identifier (step S1217). With this notification, a change of access right is valid and it is possible to access the corresponding page.

In a case where the access right is permitted, the document management system 10A displays the corresponding page on the terminal 20A (step S1218A).

In a case where the access right is not permitted, the document management system 10A displays that fact on the terminal 20A (step S1218B).

### <Terminal Screen Example>

### <Display Example of Access Permission Request Page>

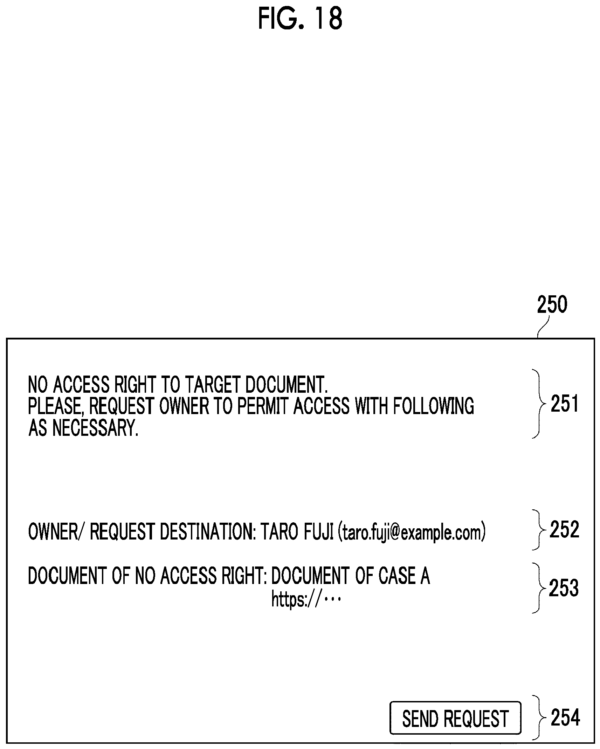

Fig. 18 is a diagram illustrating a display example of an access permission request page 250.

The access permission request page 250 illustrated in Fig. 18 includes an explanation field 251 for a reason why the page is not displayed and an operation required of a user, an information field 252 related to an owner of the corresponding page, an information field 253 for a document without access right, and a "send request" button 254.

The "send request" button 254 is an example of an operator to be used in a case of requesting granting of the access right.

The access permission request page 250 is also displayed in a format to be embedded or added to the corresponding page, in the same manner as the login page 200 (see Fig. 11). That is, the display format illustrated in Fig. 10 is adopted.

Therefore, the user can shift to a work of requesting access permission from the corresponding page.

In a case where the access permission request page 250 is not displayed in a format embedded in the corresponding page, the user needs to individually request the owner or the administrator of a sub-document for access permission by a telephone or an e-mail, which is poor in workability.

Further, in the present exemplary embodiment, in a case where the access is permitted by the owner, information of the other system that manages the sub-document corresponding to the corresponding page is updated. Therefore, in a case where the access permission request page 250 is used, operability of the user is improved as compared with a case where the error screen is popped up and displayed every time the page is turned.

In the present exemplary embodiment, a layout of the access permission request page 250 differs depending on the document management service that manages the sub-document. Meanwhile, the access permission request page 250 having the same layout may be prepared, regardless of a difference in the document management service.

In the information fields 252 and 253 illustrated in Fig. 18, information on the owner and information on the sub-document to which the access right is not granted are displayed. Therefore, the user who is browsing the bundle document BD can know in advance a person or a target requesting the request.

In a case where the "send request" button 254 is operated, a request including information of the document requesting permission of the access right is transmitted to the owner of the corresponding sub-document.

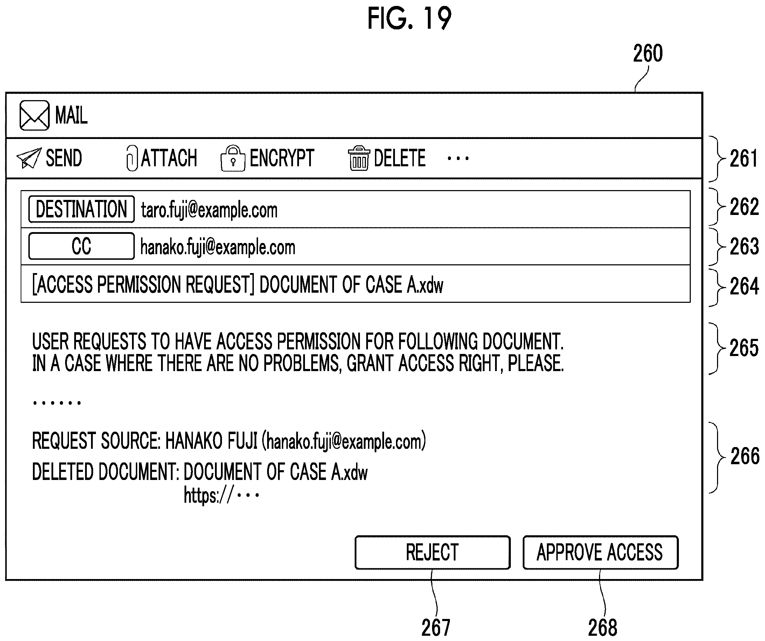

Fig. 19 is a diagram illustrating an example of a screen 260 displayed on the terminal 20B (see Fig. 17) operated by an owner who is requested to have access permission.

The screen 260 illustrated in Fig. 19 is assumed to be an operation screen of an application program for transmitting and receiving an e-mail. Therefore, operation buttons 261 are arranged in the first line. Further, an e-mail address 262 as a destination is disposed at the second line, and an e-mail address 263 as a transmission source is disposed at the third line. The destination here is an address of the owner of a document for which access permission is required.

On the fourth line, a title 264 issued by the document management system 10A (see Fig. 1) is described. In Fig. 19, the title 264 is configured with a content and information of a target document. The content is an "access permission request", and the target document is "document of case A.xdw".

On the fifth line, a work 265 which is a reason why the e-mail is issued and required of the owner is described.

On the sixth line, information 266 for a request source or the target document is described. In this example, it can be seen that the user who is the request source is "Hanako Fuji".

In addition, on the 7th line, a "reject" button 267 and an "access permission" button 268 are arranged.

In a case where the "reject" button 267 is operated, an e-mail notifying the document management system 10A, which is a transmission source, is returned.

In a case where the "access permission" button 268 is operated, access to the document is permitted and the user can browse the document.

Since the "reject" button 267 and the "access permission" button 268 are arranged inside the mail, the work of the owner becomes efficient.

### <Other Exemplary Embodiments>

(1) Although the exemplary embodiments of the present invention are described above, a technical scope of the exemplary embodiments of the present invention is not limited to the scope described in the exemplary embodiments described above. Various modifications or improvements are added to the exemplary embodiments described above within the technical scope of the exemplary embodiments of the present invention, and are apparent from the description of the claims.
(2) In a case where a specific page constituting the bundle document BD is not displayed, a file format used by a user may not be supported by the present system.

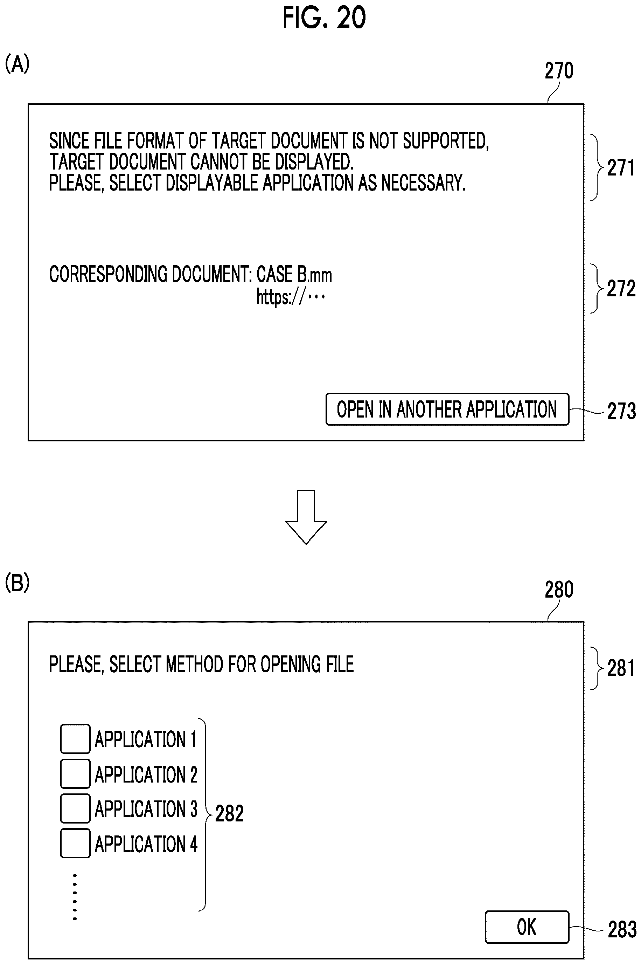

Fig. 20 is diagrams illustrating an example of an operation screen displayed in a case where the present system does not support a file format of a target document. (A) of Fig. 20 illustrates a screen 270 displayed in a case where the target document cannot be displayed since the file format is not supported, and (B) of Fig. 20 illustrates a screen 280 displayed in a case where the target document is opened.

The screen 270 illustrated in (A) of Fig. 20 is configured with an explanation field 271 for a reason why the corresponding document is not displayed and an operation required of the user, an information field 272 for the target document, and an "open in another application" button 273 for selecting an application program to open the target document.

The screen 280 illustrated in (B) of Fig. 20 is displayed in a case where the "open in another application" button 273 is operated by the user.

The screen 280 is configured with an explanation field 281 for an operation requested from the user, a field 282 for selectable application program candidates, and an "OK" button 283 for confirming selection of the application program.

The screen 270 and screen 280 illustrated in Fig. 20 is also displayed in a format to be embedded in or added to the corresponding page, in the same manner as the login page 200 (see Fig. 11). That is, the display format illustrated in Fig. 10 is adopted.

Therefore, the user can shift to the selection work of the application program from the corresponding page, and workability is improved.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 1:: Document browsing system
- 10, 10A, 10B:: Document management system
- 20, 20A, 20B:: Terminal
- 30:: Network
- 101:: Processor
- 101A:: Bundle document creation unit
- 101B:: Link URL analysis unit
- 101C:: Document display control unit
- 101D:: Authentication request unit
- 101E:: Authentication unit
- 101F:: Substitute document request unit
- 101G:: Message transmission unit
- 101H:: Document selection unit
- 101J:: Access permission request unit
- 101K:: Access right change unit
- 200:: Login page
- 210:: Substitute document request page
- 250:: Access permission request page

## Claims

1. An information processing system comprising:
a processor configured to:
manage a second document in which information for specifying a location at which a first document managed by the information processing system or another system exists is associated with a page in an arrangement order; and
when the second document is browsed, in a case where the first document associated with the page to be browsed is read and provided to a viewer, display an operator requesting a person in charge to resolve an event that the first document is not read on a screen used for browsing when the event is detected.

2. The information processing system according to claim 1,
wherein the event that the first document is not read is a case where the first document to be read does not exist at the location registered for the second document.

3. The information processing system according to claim 2, wherein the processor is configured to:
in a case where the first document does not exist at the location, request the person in charge to designate a document to be displayed as a substitute.

4. The information processing system according to claim 2, wherein the processor is configured to:
in a case where the first document does not exist at the location, request the person in charge for a new location at which the first document exists.

5. The information processing system according to claim 1,
wherein the event that the first document is not read is a case where the viewer does not have an access right to the system that manages the first document.

6. The information processing system according to claim 5, wherein the processor is configured to:
request the person in charge to grant the access right to the system that manages the first document to be read.

7. The information processing system according to claim 5, wherein the processor is configured to:
present a screen for inputting information for logging in to the system that manages the first document to be read, to the viewer.

8. The information processing system according to claim 1,
wherein the event that the first document is not read is a case where the viewer does not have an access right to the first document.

9. The information processing system according to claim 8, wherein the processor is configured to:
request the person in charge to grant the access right to the first document to be read.

10. The information processing system according to claim 8, wherein the processor is configured to:
present a screen for inputting information for accessing the first document to be read, to the viewer.

11. The information processing system according to any one of claims 1 to 10, wherein the processor is configured to:
display the operator on the page at which the event is detected.

12. The information processing system according to any one of claims 1 to 10, wherein the processor is configured to:
display the operator on an additional page inserted before or after the page at which the event is detected.

13. The information processing system according to any one of claims 1 to 10, wherein the processor is configured to:
display attribute information of the second document, in response to a request from the viewer.

14. The information processing system according to claim 13,
wherein the attribute information includes information on the system that manages the first document associated with each page of the second document, the information for specifying the location at which the first document exists, and information on the person in charge.

15. The information processing system according to any one of claims 1 to 10, wherein the processor is configured to:
search for a current person in charge of the first document, from the system that manages the first document at which the event is detected.

16. A program causing a computer to realize:
a function of managing a second document in which information for specifying a location at which a first document managed by the information processing system or another system exists is associated with a page in an arrangement order; and
a function of displaying, when the second document is browsed, in a case where the first document associated with the page to be browsed is read and provided to a viewer, an operator requesting a person in charge to resolve an event that the first document is not read on a screen used for browsing when the event is detected.

17. An information processing method comprising:
managing a second document in which information for specifying a location at which a first document managed by the information processing system or another system exists is associated with a page in an arrangement order; and
displaying, when the second document is browsed, in a case where the first document associated with the page to be browsed is read and provided to a viewer, an operator requesting a person in charge to resolve an event that the first document is not read on a screen used for browsing when the event is detected.
